# EUROPÄISCHE PATENTSCHRIFT

(11) **EP 1 268 561 B1**
(45) Veröffentlichungstag und Bekanntmachung des Hinweises auf die Patenterteilung: **28.01.2009**
(21) Anmeldenummer: 01938080.7
(22) Anmeldetag: 03.04.2001
(51) Int. Cl.: C08F 2/00, C08F 2/38, C08F 293/00

(54) **VERFAHREN ZUR HERSTELLUNG VON POLYMEREN**
METHOD FOR PRODUCING POLYMERS
PROCEDE POUR LA PRODUCTION DE POLYMERES

(30) Priorität: 04.04.2000 DE 10016651
(43) Veröffentlichungstag der Anmeldung: 02.01.2003
(73) Patentinhaber: BASF SE, 67056 Ludwigshafen (DE)
(72) Erfinder: CHRISTIE, David at BASF South East, Singapore (SG); HAREMZA, Sylke, 69151 Neckargemünd (DE); BRINKMANN-RENGEL, Susanne, 55270 Ober-Olm (DE); RAETHER, Roman, Benedikt, 67117 Limburgerhof (DE)
(74) Vertreter: Riedl, Peter
(86) Internationale Anmeldenummer: PCT/EP2001/003787
(87) Internationale Veröffentlichungsnummer: WO 2001/074908

(56) Entgegenhaltungen:
- EP-A- 0 135 280
- WO-A-00/63267
- WO-A-96/18663

## Beschreibung

Die Erfindung betrifft ein Verfahren zur Herstellung von Polymeren mit enger Molekulargewichtsverteilung sowie ein nach dem Verfahren hergestelltes Polymer.

Üblicherweise weisen durch radikalisch initiierte Polymerisation ethylenisch ungesättigter Monomere hergestellte Polymere den Nachteil auf, dass das Molekulargewicht der Polymerketten nicht linear mit dem Polymerisationsumsatz zunimmt und die Polymerketten des resultierenden Polymerisats kein einheitliches Molekulargewicht aufweisen. Das durch radikalische Polymerisation erhältliche Polymerisat weist daher normalerweise einen hohen Polydispersitätsindex PDI auf (PDI = M_{w}/Mₙ, mit M_{w} = gewichtsmittleres Molekulargewicht des Polymerisats und Mₙ = zahlenmittleres Molekulargewicht des Polymerisats). Dies hat seine Ursache zum einen in den Halbwertszeiten der Radikalstarter, die zwischen einigen Minuten und mehreren Stunden liegen können. Dadurch beginnt das Wachstum nicht für alle Polymerketten zum selben Zeitpunkt, weshalb während der Reaktion Ketten mit unterschiedlicher Kettenlänge entstehen. Zum anderen reagieren die wachsenden Polymerketten miteinander unter Kombination bzw. Disproportionierung, was zu einem Abbruch des Kettenwachstums führt. Da derartige Abbruchreaktionen während der gesamten Reaktionszeit auftreten, führt dies ebenfalls zu unterschiedlichen Kettenlängen im Polymerisat.

Um Polymerisate mit enger Molekulargewichtsverteilung zu erhalten, soll das Wachstum der Kette für alle Polymermoleküle möglichst zum selben Zeitpunkt beginnen und Kettenabbruchsreaktionen sollten unterdrückt werden.

In der WO 94/11412 wird ein Polymerisationsverfahren zur Herstellung eines thermoplastischen Harzes beschrieben, wobei eine Mischung aus einem Radikalstarter, einem stabilen freien Radikal und zumindest einem polymerisierbares Monomeren erhitzt wird. Es werden Polymere mit enger Polydispersität erhalten. Als stabiles freies Radikal werden TEMPO (2,2,6,6-Tetramethyl-1-piperidinyloxy) und PROXYL (2,2,5,5-Tetramethyl-1-pyrrolidinyloxy) und deren Derivate vorgeschlagen.

Die erst nach dem für die vorliegende Anmeldung maßgeblichen Zeitrang veröffentlichte WO 00/63267 fällt unter Art. 54(3) EPÜ und offenbart ein Verfahren zur Herstellung eines kautschukelastischen Blockcopolymerisats aus mindestens einem Block A, der aus vinylaromatischen Monomeren aufgebaut ist und eine Hartphase bildet, und/oder mindestens einen Block B, der aus Dienmonomeren aufgebaut ist und eine kautschukelastische Weichphase bildet, und mindestens einem Block B/A, der aus vinylaromatischen Monomeren und aus Dienmonomeren aufgebaut ist. In bestimmten Ausführungsformen erfolgt die Herstellung durch kontrollierte radikalische Polymerisation unter Verwendung eines stabilen N-Oxyl-Radikals. In einigen Ausführungsbeispielen ist außerdem die Mitverwendung eines Molekulargewichtsreglers in Form von t-Dodecylmercaptan veranschaulicht.

Die WO 96/18663 offenbart ein Verfahren zur radikalischen Substanzpolymerisation zur Herstellung hochmolekularer Polymere aus vinylaromatischen Monomeren, wobei man die Polymerisation in Gegenwart einer Vinylsäure durchführt, die entweder ein Schwefel- oder Phosphoratom in der sauren funktionellen Gruppe enthält.

Die EP-A-135 280 beschreibt ein Verfahren zur radikalischen Polymerisation, wobei ein Monomer zusammen mit einem Nitroxylradikal erwärmt wird.

Weitere Verfahren zur kontrollierten radikalischen Polymerisation, d. h. zur radikalischen Polymerisation in Gegenwart stabiler freier Radikale, sind in den EP-A-0 735 052, US-A-5,322,912, US-A-5,412,047 und GB 1,124,009 beschrieben.

Die in den genannten Schriften beschriebenen Verfahren haben jedoch den Nachteil, dass die Polymerisation in Gegenwart der stabilen freien Radikale nur sehr langsam und mit nicht zufriedenstellender Umsatzrate verläuft.

In der EP-A-0 735 052 wird ein Polymerisationsverfahren zur Herstellung thermoplastischer Harze beschrieben, bei dem zur Steigerung der Polymerisationsgeschwindigkeit der kontrollierten radikalischen Polymerisation bestimmte Sulfonsäuresalze mitverwendet werden. Besonders bevorzugt wird 2-Fluoro-1-methylpyridinium-p-toluolsulfonat verwendet. Die beschriebenen Sulfonsäuresalze sind allerdings nicht ohne Weiteres verfügbar und aufgrund ihres Fluorgehalts in bestimmten Anwendungen unerwünscht.

Aufgabe der Erfindung ist daher, ein alternatives Verfahren zur Herstellung von Polymeren mit enger Molekulargewichtsverteilung zur Verfügung zu stellen, das im Vergleich zu bekannten kontrollierten radikalischen Polymerisationen eine größere Reaktionsgeschwindigkeit und höhere Umsatzraten ermöglicht.

Diese Aufgabe wird durch ein Verfahren zur Herstellung von Polymeren gelöst, wobei wenigstens ein erstes ethylenisch ungesättigtes Monomer in Gegenwart stabiler freier Radikale oder Quellen stabiler freier Radikale sowie einer Verbindung mit wenigstens einer freien Thiolgruppe einer radikalisch initiierten Polymerisation unter Erhalt eines Polymeren unterzogen wird, wobei das molare Verhältnis von Verbindung mit freier Thiolgruppe zu stabilen freien Radikalen im Bereich von 0,05 bis 1,1 liegt. Bei der Verbindung mit freir Thiolgruppe handelt es sich nicht und test-Dodecylmercaptan, wenn das Monomer Styrol oder ein gemisch von Styrol und Butadien ist.

Überraschenderweise hat sich gezeigt, dass durch Zusatz von Verbindungen, die wenigstens eine freie Thiolgruppe aufweisen, eine deutliche Steigerung der Polymerisationsgeschwindigkeit erreicht werden kann, wobei gleichzeitig eine Molekulargewichtskontrolle erhalten bleibt. Die Verbindung mit wenigstens einer freien Thiolgruppe wird in solcher Menge eingesetzt, dass das molare Verhältnis von Verbindung mit freier Thiolgruppe zu stabilem freien Radikal im Bereich von 0,05 bis 1,1, vorzugsweise 0,05 bis 0,8, insbesondere 0,1 bis 0,7 liegt. Bei einer Menge unterhalb des angegebenen Bereichs wird keine nennenswerte polymerisationsgeschwindigkeitssteigernde Wirkung beobachtet. Bei einer Menge oberhalb des angegebenen Bereichs tritt keine weitere Geschwindigkeitssteigerung ein, und es werden Polymere mit unerwünscht niedrigen Molekulargewichten erhalten.

Die nach dem erfindungsgemäßen Verfahren hergestellten Polymere weisen in der Regel einen Polydispersitätsindex im Bereich von 1,1 bis 5, vorzugsweise 1,2 bis 3,5 und insbesondere 1,3 bis 2,5 auf.

Zur Durchführung der erfindungsgemäßen Verfahren wird zweckmäßigerweise eine Reaktionsmischung, die ein stabiles freies Radikal oder eine Quelle eines stabilen freien Radikals, wenigstens ein ethylenisch ungesättigtes Monomer sowie eine Verbindung mit wenigstens einer freien Thiolgruppe und - soweit erforderlich - einen Radikalstarter sowie gegebenenfalls Lösungsmittel und/oder übliche Polymerisationshilfsstoffe enthält, auf eine erhöhte Reaktionstemperatur, z. B. 40 bis 200 °C, insbesondere 60 bis 150 °C, erwärmt. Nach erfolgter Reaktion und Abkühlen kann das Polymere isoliert und gegebenenfalls gewaschen und getrocknet werden. Werden als Quelle für die stabilen freien Radikale die nachstehend näher erläuterten Radikalbildner eingesetzt, kann sich der Zusatz eines separaten Radikalstarters erübrigen. Alternativ kann die radikalische Polymerisation auch in Abwesenheit von Radikalstartern thermisch initiiert werden, insbesondere bei Verwendung vinylaromatischer Monomere, wie Styrol. Selbstverständlich können auch Gemische ethylenisch ungesättigter Monomere verwendet werden.

Das Verfahren eignet sich auch zur Herstellung von Blockcopolymeren. Dazu wird wenigstens ein zweites ethylenisch ungesättigtes Monomer in Gegenwart des vorstehend erhaltenen Polymers einer radikalischen Polymerisation unterzogen. Geeigneterweise gibt man zu dem - gegebenenfalls isolierten - Polymeren das zweite ethylenisch ungesättigte Monomer, das in der Regel verschieden vom ersten ethylenisch ungesättigten Monomer ist, gegebenenfalls unter Zusatz frischer Mengen von Radikalstarter und freien stabilen Radikalen, und erwärmt das Gemisch zur Polymerisation. Nach dem Abkühlen kann ein Blockcopolymer isoliert werden, das gegebenenfalls gewaschen und getrocknet wird. Unter einem "zweiten ethylenisch ungesättigten Monomer" soll vorliegend auch ein Monomerengemisch verstanden werden, das hinsichtlich der konstituierenden Monomeren oder Zusammensetzung vom ersten ethylenisch ungesättigten Monomer verschieden ist.

Um höhere Blockcopolymere zu erhalten, kann nach Polymerisation des zweiten Monomers ein drittes Monomer zugegeben werden und die Polymerisation in der gleichen Weise durchgeführt werden. Die Isolierung der intermediär entstehenden Polymere wird dann empfohlen, wenn eine möglichst hohe Reinheit, scharfe Blockgrenzen und/oder eine hohe Homogenität innerhalb der Blöcke angestrebt werden.

Als Radikalstarter für die Polymerisation kommen prinzipiell alle Verbindungen in Betracht, die in der Lage sind, eine radikalische Polymerisation auszulösen. Geeignete Radikalstarter sind beispielsweise Peroxide, Hydroperoxide, Peroxodisulfate, Percarbonate, Peroxoester, Wasserstoffperoxid und Azoverbindungen. Beispiele für Initiatoren sind Wasserstoffperoxid, Dibenzoylperoxid, Dicyclohexylperoxidicarbonat, Dilauroylperoxid, Methylethylketonperoxid, Di-tert-butylperoxid, Acetylacetonperoxid, tert-Butylhydroperoxid, Cumolhydroperoxid, tert-Butylperneodecanoat, tert-Amylperpivalat, tert-Butylperpivalat, tert-Butylperneohexanoat, tert-Butylperbenzoat, Lithium-, Natrium-, Kalium- und Ammoninmperoxodisulfat, Azoisobutyronitril, 2,2-Azobis(2-amidinopropan)dihydrochlorid, 2-(Carbamoylazo)isobutyronitril und 4,4-Azo-bis(4-cyanovaleriansäure). Die Radikalstarter können sowohl öllöslich als auch wasserlöslich sein und werden dem gewählten Polymerisationsmedium und der gewählten Polymerisationstemperatur in an sich bekannter Weise angepasst.

Als nach dem erfindungsgemäßen Verfahren polymerisierbare Monomere kommen alle diejenigen in Betracht, die wenigstens eine ethylenisch ungesättigte Gruppe aufweisen. Die Monomere können einzeln oder als Gemische untereinander eingesetzt werden. Zu diesen Monomeren zählen Olefine, insbesondere α-Olefine, wie z. B. Ethylen oder Propylen, Cycloalkene, wie Cyclohexen oder Norbornen, vinylaromatische Monomere, wie Styrol, α-Methylstyrol, o-Chlorstyrol oder Vinyltoluole, 1,1-Diphenylethylen und cis-und/oder trans-Stilben, wobei die Phenylringe einen oder zwei unter Nitro, Hydroxy, Halogen, C₁-C₄-Alkyl, C₁-C₄-Alkoxy, Cyano, Sulfonat ausgewählte Substituenten aufweisen können, Vinyl- und Vinylidenhalogenide, wie Vinyl- oder Vinylidenchlorid, Ester aus Vinylalkohol und 1 bis 12 C-Atome aufweisenden Monocarbonsäuren, wie Vinylacetat, Vinylpropionat, Vinyl-n-butyrat, Vinyllaurat, Ester aus Allylalkohol mit 1 bis 12 C-Atomen aufweisenden Monocarbonsäuren, wie Allylacetat, Allylpropionat, Allyl-n-butyrat und Allyllaurat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im Allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -isobutyl-, -tert-butyl- und -2-ethylhexylester, Maleinsäuredimethylester oder Maleinsäure-n-butylester, Nitrile α,β-monoethylenisch ungesättigter Carbonsäuren, wie Acrylnitril und Methacrylnitril, sowie C₄- bis C₈-konjugierte Diene, wie 1,3-Butadien und Isopren. Ferner sind 3 bis 6 C-Atome aufweisende α,β-monoethylenisch ungesättigte Mono- und Dicarbonsäuren, deren Anhydride und deren Amide, wie z. B. Acrylsäure, Methacrylsäure, Maleinsäure, Fumarsäure und Itaconsäure; Maleinsäureanhydrid; Acrylamid und Methacrylamid, N-Methylacrylamid, N-Ethylacrylamid, N-Isopropylacrylamid und N,N'-Dimethylacrylamid, ferner Vinylsulfonsäure und deren wasserlösliche Salze, sowie N-Vinylpyrrolidon, geeignet. Dies gilt ebenso für solche Monomere, die eine funktionelle Gruppe, z. B. eine Epoxy-, Hydroxy-, Ureido- oder N-Methylolgruppe aufweisen. Beispiele hierfür sind Glycidyl(meth)acrylat, Hydroxyalkyl(meth)acrylate, Aminoalkyl(meth)acrylate, N-Alkylolamide von 3 bis 10 C-Atome aufweisenden α,β-monoethylenisch ungesättigten Carbonsäuren sowie deren Ether mit 1 bis 4 C-Atomen aufweisenden Alkanolen.

Bevorzugt eingesetzte Monomere sind Styrol, Butadien, Acrylnitril, n-Butylacrylat, 2-Ethylhexylacrylat, Methylmethacrylat, n-Butyl- und t-Butylmethacrylat und Gemische davon.

Erfindungsgemäß geeignete Verbindungen mit wenigstens einer freien Thiolgruppe sind bevorzugt solche der allgemeinen Formel (I) 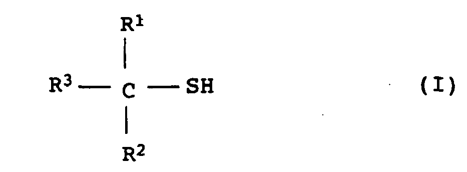 worin
R¹ , R², und R³ unabhängig voneinander für Wasserstoff, Alkyl, Aryl, Aralkyl, Cycloalkyl, Heterocyclyl oder eine Gruppe -Y-Z stehen, wobei
- Y: ausgewählt ist unter einer Einfachbindung, linearem, oder verzweigtem Alkylen, das gegebenenfalls durch ein oder mehrere, nicht benachbarte Sauerstoffatome unterbrochen sein kann, oder Arylen, das gegebenenfalls mit C₁-C₄-Alkyl, C₁-C₄-Alkoxy oder Halogen substituiert ist, und
- Z: ausgewählt ist unter den folgenden funktionellen Gruppen: -OR⁴, -NR⁴R⁵, -N+R⁴R⁵R⁶, -C(O)-R⁴, C(O)-NR⁴R⁵, -OC(O)-OR⁴, -OC(O)-NR⁴R⁵, -N(R⁶)-C(O)-R⁴, -N(R⁶)-C(O)-OR⁴, -N(R⁶)-C(O)-NR⁴R⁵, -SR⁴, -S(O)-R⁴, -S(O)₂-R⁴, -O-S(O)₂-OR⁴, Si(R⁷)₃, -O-Si(R⁷)₃, -S(O)₂-NR⁴R⁵, -P(O)(OR⁴)₂, -P(O)(NR⁴R⁵)₂, -O-P(O)R⁴(OR⁵), -Si(OR⁷)₃, -OSi(OR⁷)₃, -CN, -OCN, -SCN, -NO₂ oder Halogen, sowie im Falle von sauren funktionellen Gruppen auch die Alkalimetall-, Erdalkalimetall- oder Ammoniumsalze, im Falle basischer Gruppen auch die Säureadditionssalze, und worin R⁴, R⁵, R⁶, und R⁷,unabhängig voneinander für Wasserstoff, Alkyl, Aryl, Aralkyl, Alkylcarbonyl oder Arylcarbonyl stehen; oder
R¹ oder R² gemeinsam mit dem Kohlenstoffatom, an das sie gebunden sind, für einen Cycloalkylrest stehen, der gegebenenfalls wenigstens eine der vorgenannten funktionellen Gruppen -Y-Z, einen doppelt gebundenen Sauerstoff oder gegebenenfalls Sauerstoff, Stickstoff oder Schwefel als Heteroatom aufweist; oder
R¹ und R² gemeinsam mit dem Kohlenstoffatom, an das sie gebunden sind, eine Carbonylfunktion, eine Iminofunktion, die gegebenenfalls mit Alkyl, Aryl oder Aralkyl substituiert ist, bedeuten; oder
R¹, R² und R³ gemeinsam mit dem Kohlenstoffatom, an das sie gebunden sind, für einen Arylrest, der gegebenenfalls wenigstens eine der vorgenannten Gruppen -Y-Z aufweist, stehen; oder
R¹, R² und R³ gemeinsam für einen heterocyclischen Rest stehen.

"Alkyl" steht vorzugsweise für C₁-C₂₀-Alkyl; "Aryl" steht vorzugsweise für C₆-C₁₀-Aryl, insbesondere Phenyl; "Aralkyl" steht vorzugsweise für Phenyl-C₁-C₈-alkyl, insbesondere Benzyl und Phenethyl; "Cycloalkyl" steht vorzugsweise für C₃-C₈-Cycloalkyl, insbesondere Cyclopentyl und Cyclohexyl; "Heterocyclyl" steht vorzugsweise für aromatische Fünfringe, in denen 1, 2, 3 oder 4 Atome von C verschieden sein können, und z. B. unter O, S und/oder N ausgewählt sind.

Bevorzugt ist die Verbindung mit mindestens einer freien Thiolgruppe ausgewählt unter Alkylmercaptanen, Aminoalkanthiolen, deren Mono- und Di-N-C₁-C₄-alkylderivaten; aromatischen Aminothiolen sowie deren Mono- und Di-N-C₁-C₄-alkylderivaten; aliphatischen und aromatischen Mercaptocarbonsäuren, Mercaptodicarbonsäuren und Aminomercaptocarbonsäuren, deren N-Alkyl, N-Aryl, N-Aralkyl-Derivaten bzw. deren N,N-Dialkyl-, N,N-Diaryl-, N,N-Bis(aralkyl)derivaten, den Estern der genannten Carbonsäuren mit aliphatischen, aromatischen oder araliphatischen Alkoholen; aromatischen und aliphatischen Mercaptoalkoholen sowie Estern der Mercaptoalkohole mit C₁-C₁₀-Alkancarbonsäuren, C₆-C₂₀-Arylcarbonsäuren oder C₇-C₂₀-Aralkylcarbonsäuren; Mercaptodialkylketonen; Mercaptoalkylarylketonen; Mercaptoalkyl- und Mercaptoarylsulfonsäuren sowie deren Alkali-, Erdalkali- und Ammoniumsalzen; Thioharnstoff, der gegebenenfalls an einem oder beiden Stickstoffatomen mit Alkyl, Aryl, Aralkyl, Alkylcarbonyl oder Arylcarbonyl substituiert ist; Thiosemicarbazid, das gegebenenfalls am Amin-Stickstoff mit Alkyl, Aryl, Aralkyl, Alkylcarbonyl oder Arylcarbonyl substituiert ist; Mercapto-substituierten Stickstoffheterocyclen, umfassend mercaptosubstituiertes Imidazol, Imidazolin, Thiazol, Thiazolin, Triazol, Thiadiazol und Oxazol, die gegebenenfalls mit Amino, Halogen, Alkyl oder Aryl substituiert sind und/oder einen ankondensierten, gegebenenfalls substituierten Benzolring aufweisen; aliphatische und aromatische Thiocarbonsäuren sowie deren Amide, N-Alkyl- und N-Arylamide; Mercaptoalkyltrialkoxysilanen.

Die Verbindung mit mindestens einer freien Thiolgruppe ist insbesondere ausgewählt unter C₁-C₂₀-Alkylmercaptanen, vorzugsweise C₄-C₁₈-Alkylmercaptanen, wie Butanthiol oder tert-Dodecylmercaptan oder n-Dodecylmercaptan, 2-Aminoethanthiol, N-Methyl-, N,N-Dimethyl-, N-Ethyl- und N,N-Diethyl-2-aminoethanthiol, 2-, 3- und 4-Aminothiophenol, 2-Mercaptoessigsäure, 2-Mercaptopropionsäure, 2-Mercaptoisobuttersäure, 2-Mercaptobernsteinsäure, 2-, 3- und 4-Mercaptobenzoesäure, 2-Amino-3-mercapto-3-methylbutansäure, den Methyl-, Ethyl- und Phenylestern der genannten Carbonsäuren, 2-Hydroxyethanthiol, 2- und 3-Hydroxypropanthiol, 2- und 4-Hydroxybutanthiol, 2-Mercaptobutan-1,4-diol, α-Thioglycerin, 2-Hydroxycyclopentanthiol, 2- und 4-Mercaptophenol, 2-Mercaptoethansulfonsäure, 2- und 3-Mercaptopropansulfonsäure, 2- und 4-Mercaptobutansulfonsäure sowie den Alkali-, Erdalkali- oder Ammoniumsalzen der genannten Sulfonsäuren, 1-Mercaptoaceton, Phenacylthiol, 4-Mercaptoacetophenon, 4-Mercaptobenzophenon, Thioharnstoff, N-Methyl-, N-Ethyl-, N-Alkyl-, N-Acetyl- und N-Phenylthioharnstoff, N,N-Dimethyl-, N,N-Diethyl-, N,N-Diisopropyl-, N,N-Di-n-butyl-und N,N-Diphenylthioharnstoff, Thiosemicarbazid, 4-Methyl-, 4-Ethyl-, 4-Phenylthiosemicarbazid, Mercaptothiadiazol, 2-Amino-5-mercaptothiadiazol, Thiazolin-2-thiol, Imidazolin-2-thiol, 3-Amino-5-mercaptotriazol, 2-Mercaptobenzimidazol, 2-Mercaptobenzoxazol, 2-Mercaptobenzothiazol, Thioessigsäure, Thiopropionsäure, Thiobenzoesäure, Thioacetamid, Thiobenzamid, 3-Mercaptopropyltrimethoxysilan und -triethoxysilan. C₄-C₁₈-Alkyl-mercaptane sind aufgrund ihrer Verfügbarkeit im Allgemeinen bevorzugt.

Die stabilen freien Radikale können der Reaktionsmischung als solche zugesetzt werden oder sie können aus Radikalbildnern in der Reaktionsmischung erzeugt werden. Stabile freie Radikale sind normalerweise nicht in der Lage, eine radikalische Polymerisation von Monomeren auszulösen. Diese Verbindungen können jedoch über eine reversible Blockierung des Kettenendes eines Polymeren dessen Wachstum steuern, da stationär nur eine geringe Anzahl an freien radikalischen Kettenenden in der Reaktionsmischung vorliegt, wodurch die Wahrscheinlichkeit von irreversiblen Kettenabbruchsreaktionen durch Kombination oder Disproportionierung verringert wird. Solche stabilen freien Radikale, die zur Kontrolle radikalischer Polymerisationen verwendet werden können, sind dem Fachmann bekannt.

Das stabile freie Radikal bzw. die Quelle stabiler freier Radikale sollte, bezogen auf die molare Menge an ethylenisch ungesättigten Monomeren, in einer Menge von 10⁻⁶ bis 10 Mol-%, insbesondere 10⁻⁴ bis 5 Mol-%, in der Reaktionsmischung enthalten sein.

Wird die Polymerisation durch Radikalstarter initiiert, wird das molare Verhältnis zwischen stabilem Radikal bzw. der Quelle stabiler freier Radikale und Radikalstarter im Allgemeinen zwischen 0,1 und 10, vorzugsweise 0,5 und 5, insbesondere 0,8 bis 4 gewählt.

Als stabile freie Radikale kommen vor allem freie N-Oxyl-Radikale in Betracht. Sie lassen sich beispielsweise durch folgende allgemeine Formel beschreiben: 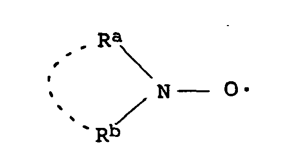 worin R^{a} und R^{b} für organische Reste stehen, die miteinander verbunden sein können, wobei die Summe der Molekulargewichte von R^{a} und R^{b} mehr als 15, vorzugsweise mehr als 28 beträgt.

Geeignete N-Oxyl-Radikale weisen z. B. die folgenden Strukturen auf: 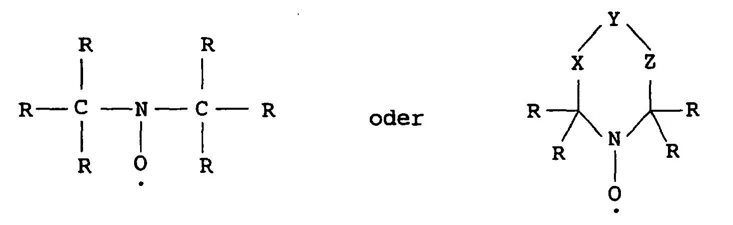 worin R für gleiche oder verschiedene Alkyl- Cycloalkyl- Aralkyl-oder Arylreste mit bis zu 24 C-Atomen steht, wobei geminale R-Reste auch paarweise zu einem Ringsystem verbunden sein können, und X, Y und Z unabhängig voneinander für CR'₂, CR'OH, CR'(COOH), O, NR, S, SO₂, CO oder eine chemische Bindung stehen, mit der Maßgabe, dass maximal ein Rest X, Y oder Z für O oder S und maximal ein Rest X, Y oder Z für eine chemische Bindung steht. R' steht für Wasserstoff oder einen Alkyl-, Cycloalkyl-, Aralkyl- oder Arylrest mit bis zu 24 C-Atomen. Beispielsweise steht R für einen C₁ bis C₂₀-, insbesondere C₁ bis C₈-Alkylrest, einen C₅- oder C₆-Cycloalkylrest, einen Benzylrest oder einen Phenylrest. X-Y-Z ist beispielsweise -(CH₂)₂- oder -(CH₂)₃-, CH₂-CH(OH)-CH₂-, -CH₂-CO-O-oder -CH₂-O-.

Weiterhin kommen auch N-Oxylverbindungen mit aromatischen Substituenten wie die folgenden Strukturen in Betracht 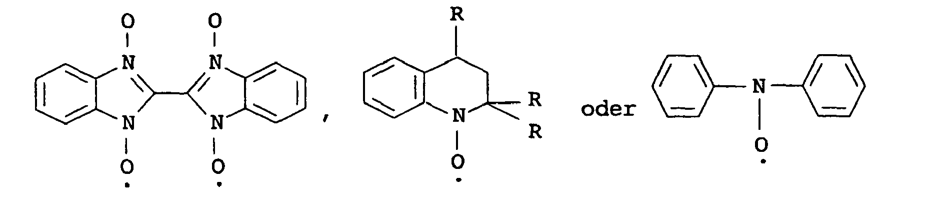 wobei die aromatischen Ringe jeweils noch 1 bis 3 inerte Substituenten tragen können, wie z. B. C₁- bis C₄-Alkyl, C₁- bis C₄-Alkoxy, Ester, Amid oder Cyano.

Mit Vorteil werden N-Oxyl-Radikale eingesetzt, die sich von cyclischen Aminen ableiten, z. B. von Piperidin- oder Pyrrolidinverbindungen, die im Ring ein weiteres Heteroatom, wie Stickstoff, Sauerstoff oder Schwefel enthalten können, wobei dieses Heteroatom nicht in Nachbarstellung zum Aminstickstoff steht. Die sterische Hinderung ist durch Substituenten in beiden Nachbarstellungen zum Aminstickstoff gegeben, wobei als Substituenten Kohlenwasserstoffreste in Betracht kommen, die alle 4 Wasserstoffatome der α-CH₂-Gruppen ersetzen. Beispielsweise seien als Substituenten Phenyl, C₃- bis C₆-Cycloalkyl, Benzyl und insbesondere C₁- bis C₆-Alkylreste genannt, wobei die an demselben α-C-Atom gebundenen Alkylreste auch untereinander zu einem 5- oder 6-Ring verbunden sein können. Vorzugsweise werden als N-Oxyle sterisch gehinderte Aminderivate des 2,2,6,6-Tetraalkylpiperidins eingesetzt.

Bevorzugte N-Oxyl-Verbindungen sind solche der allgemeinen Formel (II) oder (IIa) 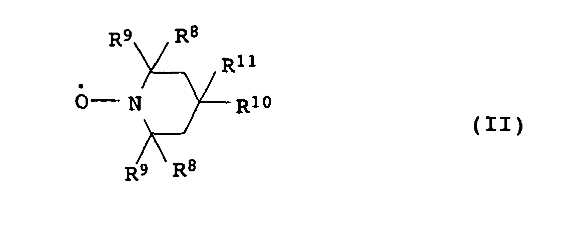 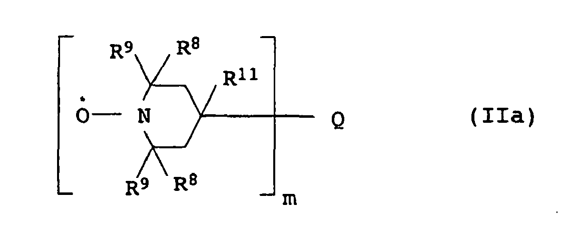 wobei
- R⁸ und R⁹: unabhängig voneinander jeweils C₁- bis C₄-Alkyl, Phenyl oder R⁸ und R⁹ gemeinsam mit dem C-Atom, an das sie gebunden sind, einen 5- oder 6-gliedrigen, gegebenenfalls substituierten, gesättigten Kohlenwasserstoffring, der gegebenenfalls mit C₁-C₂-Alkylen überbrückt oder mit einem weiteren 5- oder 6-gliedrigen Kohlenwasserstoffring anelliert ist und 1 oder 2 Heteroatome, ausgewählt unter O, S oder N, sowie 1 oder 2 Ketogruppen enthalten kann,
- R¹⁰: Wasserstoff, Hydroxy, Amino, SO₃M, OSO₃M, PO₃M, OPO₃M₂, COOM, oder einen der folgenden Reste steht 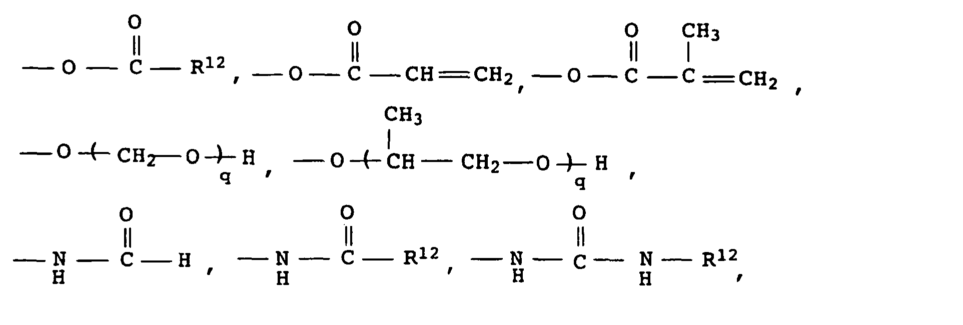 wobei M für Wasserstoff oder ein Alkalimetall, vorzugsweise Li, Na und K steht,
- R¹¹: Wasserstoff, C₁- bis C₄-Alkyl, C₁- bis C₄-Alkoxy, oder
- R¹⁰: und R¹¹ gemeinsam Sauerstoff oder NOH, oder
- R¹⁰ und R¹¹: gemeinsam mit dem C-Atom, an das sie gebunden sind, einen 5- oder 6-gliedrigen, gegebenenfalls substituierten, gesättigten Ring bilden, der 1 oder 2 Heteroatome, ausgewählt unter O, S oder N, sowie 1 oder 2 Ketogruppen enthalten kann,
- R¹²: C₁- bis C₁₂-Alkyl, C₂- bis C₁₂-Alkenyl, C₆- bis C₁₂-Aryl oder C₇- bis C₁₄-Aralkyl,
- Q: einen m-wertigen, über Kohlenstoff, Sauerstoff oder Stickstoff oder Schwefel gebundenen organischen Rest mit vorzugsweise 2 bis 10 000 Atomen, insbesondere 4 bis 2 000 Atomen,
- m: 2 bis 100, vorzugsweise 2 oder 3,
- q: 1 bis 10
bedeuten.

R⁸ und R⁹ können C₁- bis C₄-Alkylgruppen, wie Methyl, Ethyl, n-Propyl, iso-Propyl, n-Butyl, iso-Butyl, sec-Butyl oder tert-Butyl sein oder sie können zusammen eine Tetra- oder Pentamethylengruppe bilden. Vorzugsweise sind R⁸ und R⁹ Methylgruppen.

Bevorzugte Reste Q sind beispielsweise die folgenden Reste 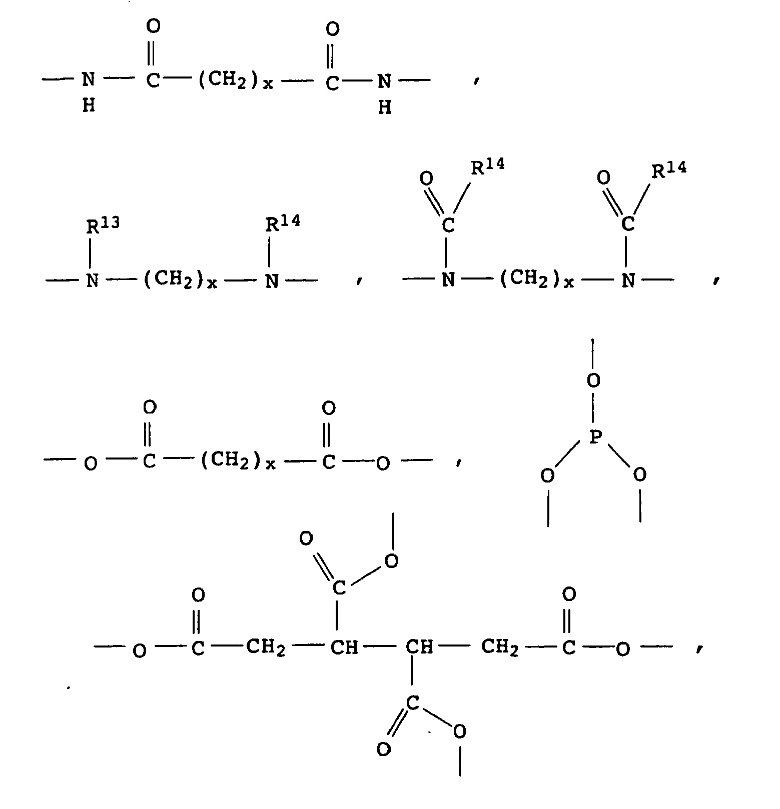 wobei
- R¹³: C₁- bis C₁₂-Alkyl, vorzugsweise C₁- bis C₄-Alkyl,
- R¹⁴: Wasserstoff oder C₁- bis C₁₂-Alkyl, vorzugsweise Wasserstoff oder C₁- bis C₄-Alkyl,
- x: 1 bis 12
bedeuten.

Weitere geeignete N-Oxyle sind auch oligomere oder polymere Verbindungen, welche als Polymerhauptkette ein Polysiloxan besitzen und in der Seitenkette mit N-Oxyl-Gruppierungen substituiert sind, welche sich vom 2,2,6,6-Tetraalkylpiperidin ableiten. Als bevorzugte N-Oxylgruppierung wird dabei der 2,2,6,6-Tetramethylpiperidin-N-oxyl-Rest verwendet.

Bevorzugte Nitroxylverbindungen sind die folgenden:
1-Oxyl-2,2,6,6-tetramethylpiperidin,
1-Oxyl-2,2,6,6-tetramethylpiperidin-4-ol,
1-Oxyl-2,2,6,6-tetramethylpiperidin-4-on,
1-Oxyl-2,2,6,6-tetramethylpiperidin-4-yl-acetat,
1-Oxyl-2,2,6,6-tetramethylpiperidin-4-yl-2-ethylhexanoat,
1-Oxyl-2,2,6,6-tetramethylpiperidin-4-yl-stearat,
1-Oxyl-2,2,6,6-tetramethylpiperidin-4-yl-benzoat,
1-Oxyl-2,2,6,6-tetramethylpiperidin-4-yl-(4-tert-butyl)benzoat,
Bis(1-oxyl-2,2,6,6-tetramethylpiperidin-4-yl)-succinat,
Bis(1-oxyl-2,2,6,6-tetramethylpiperidin-4-yl)-adipat,
Bis(1-oxyl-2,2,6,6-tetramethylpiperidin-4-yl)-sebacat,
Bis(1-oxyl-2,2,6,6-tetramethylpiperidin-4-yl)-n-butylmalonat,
Bis(1-oxyl-2,2,6,6-tetramethylpiperidin-4-yl)-phthalat,
Bis(1-oxyl-2,2,6,6-tetramethylpiperidin-4-yl)-isophthalat,
Bis(1-oxyl-2,2,6,6-tetramethylpiperidin-4-yl)-terephthalat,
Bis(1-oxyl-2,2,6,6-tetramethylpiperidin-4-yl)-hexahydroterephthalat,
N,N'-Bis(1-oxyl-2,2,6,6-tetramethylpiperidin-4-yl)-adipinamid,
N-(1-Oxyl-2,2,6,6-tetramethylpiperidin-4-yl)-caprolactam,
N-(1-Oxyl-2,2,6,6-tetramethylpiperidin-4-yl)-dodecylsuccinimid,
N,N'-Bis(1-oxyl-2,2,6,6-tetramethylpiperidin-4-yl)-N,N'-bisformyl-1,6-diaminohexan,
4,4'-Ethylenbis(1-oxyl-2,2,6,6-tetramethylpiperazin-3-on),
Tris-(2,2,6,6-tetramethyl-1-oxyl-piperidin-4-yl)phosphit
4-Hydroxy-2,6-diphenyl-2,6-dimethyl-1-oxyl-piperidin,
4-Carboxy-2,2,6,6-tetramethyl-1-oxyl-piperidin,
4-Carboxy-2,6-diphenyl-2,6-dimethyl-1-oxyl-piperidin,
3-Carboxy-2,2,5,5-tetramethyl-1-oxyl-pyrrolidin,
3-Carboxy-2,5-diphenyl-2,5-dimethyl-1-oxyl-pyrrolidin, das Natrium-, Ammonium- oder Kaliumsalz des Schwefelsäurehalbesters des
4-Hydroxy-2,2,6,6-tetramethyl-1-oxyl-piperidin,
5,5-Dimethyl-3-spiro-cyclopentyl-morphol-2-on-4-oxyl,
5,5-Dimethyl-3-spiro-cyclohexyl-morphol-2-on-4-oxyl,
5,5-Dimethyl-3-spiro-cyclopentyl-morpholin-4-oxyl,
5,5-Dimethyl-3-spiro-cyclohexyl-morpholin-4-oxyl, Di-tert-butyl-nitroxyl,
N-tert-butyl-1-diethylphosphono-2,2-dimethylpropyl-nitroxyl und
N-tert-butyl-1-phenyl-2-methylpropyl-nitroxyl.

Als Quelle der stabilen freien Radikale können Radikalbildner verwendet werden, die dadurch gekennzeichnet sind, dass durch homolytische Spaltung, z. B. durch Thermolyse, einer chemischen Bindung als ein Fragment ein stabiles freies Radikal entsteht. Als anderes Fragment wird vorzugsweise ein C-Radikal gebildet, das als Radikalstarter der Polymerisationsreaktion geeignet ist.

Bevorzugte C-Radikale sind die Fragmente üblicher Polymerisationsinitiatoren, z. B. Methyl-, Ethyl-, Cyclohexyl-, Octyl-, C(CN)(CH₃)₂-, CHPhCH₃- oder CH(CH₃)COOR-(R=C₁-C₄-Alkyl)-Radikale. Das C-Radikal kann außerdem für eine oligomere oder polymere Kette aus Einheiten ethylenisch ungesättigter Monomere bestehen. Die Radikalbildner können hergestellt werden, indem man stabile freie Radikale - gegebenenfalls in Gegenwart einer geringen Menge ethylenisch ungesättigter Monomere - mit einem Polymerisationsinitiator erwärmt.

Es können Emulgatoren oder Schutzkolloide mitverwendet werden. Es kommen anionische, nichtionische, kationische und amphotere Emulgatoren in Betracht. Bevorzugt sind anionische Emulgatoren, beispielsweise Alkylbenzolsulfonsäure, sulfonierte Fettsäuren, Sulfosuccinate, Fettalkoholsulfate, Alkylphenolsulfate, und Fettalkoholethersulfate. Als nichtionische Emulgatoren können beispielsweise Alkylphenolethoxylate, Fettsäureethoxylate, Alkanolamidmethoxylate, Alkanolamidethoxylate, EO/PO-Blockcopolymere und Alkylpolyglucoside verwendet werden. Als kationische bzw. amphotere Emulgatoren werden z. B. quaternisierte Aminoalkoxylate, Alkylbetaine, Alkylamidobetaine und Sulfobetaine verwendet. Typische Schutzkolloide sind z. B. Cellulosederivate, Polyethylenglycol, Polypropylenglycol, Copolymerisate aus Ethylenglycol und Propylenglycol, Polyvinylacetat, Polyvinylalkohol, Polyvinylether, Stärke und Stärkederivate, Dextran, Polyvinylpyrrolidon, Polyvinylpyridin, Polyethylenimin, Polyvinylimidazol, Polyvinylsuccinimid, Polyvinyl-2-methylsuccinimid, Polyvinyl-1,3-oxazolidon-2 und Polyvinyl-2-methylimidazolin.

Das erfindungsgemäße Verfahren kann als Lösungs-, Substanz-, Suspensions-, Fällungs-, Emulsions-, Miniemulsions- und Mikroemulsionspolymerisation, insbesondere in wässrigem Medium durchgeführt werden. Das Verfahren kann auch als inverse radikalische Emulsionspolymerisation durchgeführt werden. Geeignete Lösungsmittel für eine Durchführung als Lösungspolymerisation sind z. B. aliphatische oder aromatische Kohlenwasserstoffe, wie Cyclohexan, Methylcyclohexan, Toluol, Ethylbenzol oder die Xylole. Die Durchführung des erfindungsgemäßen Verfahrens erfolgt in dem Fachmann an sich bekannter Weise. Lösungs-, Substanz- und Miniemulsionspolymerisationstechniken sind im Allgemeinen bevorzugt.

Die Reaktionstemperatur wird zwischen 40 und 200 °C, vorzugsweise 60 bis 150 °C, gewählt. Geeignete Reaktionszeiten betragen zwischen 30 Minuten und 60 Stunden.

Die Erfindung wird durch die folgenden Beispiele näher veranschaulicht.

### Beispiel 1 (Referenzbeispiel)

Die in der nachstehend Tabelle angegebenen Mengen 2,2,6,6-Tetramethylpiperidin-N-oxyl (TEMPO), tert-Dodecylmercaptan (t-DMK) und Dibenzoylperoxid (BPO) wurden in 360 g Styrol gelöst. Man versetzte das Gemisch mit 1 000 ml Cyclohexan und erwärmte es auf 95 °C. Die Probe wurde eine Stunde lang bei dieser Temperatur gehalten und dann auf 130 °C erwärmt. Die Proben wurden über die in der Tabelle angegebene Zeitspanne bei 130 °C gehalten. Anschließend wurden die Proben auf Raumtemperatur abgekühlt, in einem Überschuss Methanol gefällt, durch Filtration gesammelt, mehrmals mit Methanol gewaschen und bei 80 °C im Vakuum getrocknet. In der Tabelle sind der Umsatz, das gewichtsmittlere Molekulargewicht (M_{w}), das zahlenmittlere Molekulargewicht (Mₙ) und der Polydispersitätsindex (PDI) des erhaltenen Polymers angegeben.

**Tabelle**

| | TEMPO [g] | BPO [g] | t-DMK [g] | zeit [h] | Umsatz [%] | Mₙ [g/mol] | M_{w} [g/mol] | PDI |
|---|---|---|---|---|---|---|---|---|
| | 0,656 | 0,855 | 0.25 | 4 6 23 | 21,8 28,4 57,8 | 21200 25200 30900 | -28600 35900 51400 | 1,35 1,43 1,67 |
| 2 | 0,656 | 0,855 | 0,50 | 4 6 23 | 31 38,6 64,5 | 15700 20600 23300 | 22000 30600 36800 | 1,40 1,49 1,58 |
| 3 | 0,656 | 0,855 | 1,00 | 4 6 23 | 30,8 38,6 64,5 | 18400 19200 21800 | 31100 34600 42500 | 1,69 1,81 1,95 |
| 4 | 0,656 | 0,855 | 1,70 | 4 6 | 32,9 38,9 | n.b. | n.b. | |
| 5 | 0,656 | 0,855 | 4,25 | 4 6 | 31,3 41,1 | n.b. | n.b. | |
| 6 | 0,656 | 0,855 | 0 | 5 | 0 | - | - | - |

| | | | | | | | | |
|---|---|---|---|---|---|---|---|---|
| n.b. = nicht bestimmt | | | | | | | | |

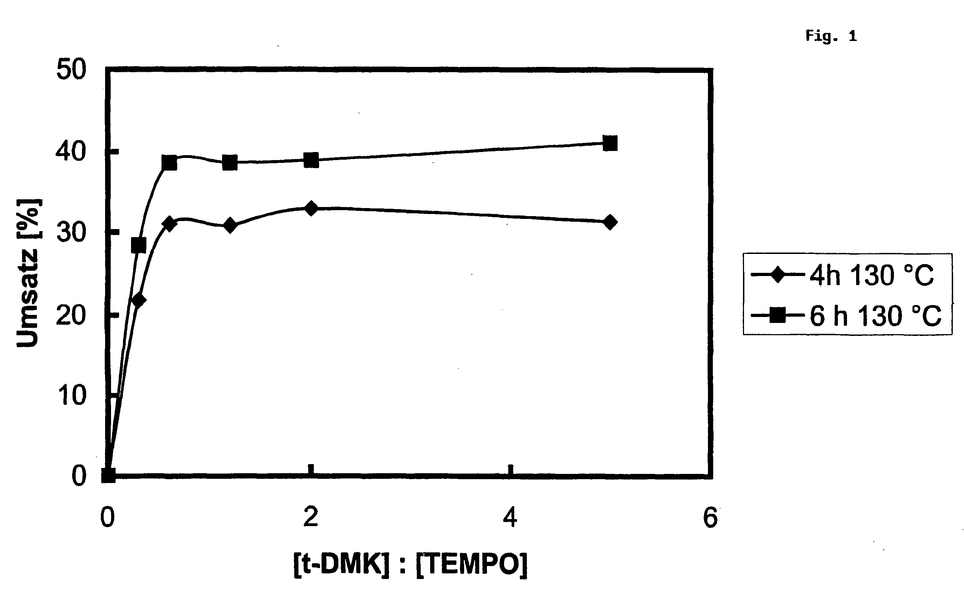

In Fig. 1 ist der Umsatz in % nach 4 Stunden bei 130 °C bzw. nach 6 Stunden bei 130 °C in Abhängigkeit des molaren Verhältnisses von tert-Dodecylmercaptan zu TEMPO angegeben. Wie aus Fig. 1 ersichtlich ist, wird ohne Zusatz von tert-Dodecylmercaptan kein feststellbarer Umsatz beobachtet. Bei Zugabe solcher Mengen von tert-Dodecylmercaptan, dass das molare Verhältnis von tert-Dodecylmercaptan zu TEMPO im Bereich von 0,05 bis 1,1 liegt, wird eine deutliche Steigerung der Polymerisationsgeschwindigkeit beobachtet. Die Verwendung größerer Mengen tert-Dodecylmercaptan führt zu keiner weiteren Steigerung der Polymerisationsgeschwindigkeit.

### Beispiel 2

Man löste 4-Hydroxy-2,2,6,6-tetramethylpiperidin-N-oxyl (4-OH-TEMPO) (0,82 g) in Wasser (350 g). Benzoylperoxid (75 %ig in Wasser; 1,19 g), Hexadecan (4,8 g), Lumiten I-RA (Bis-isooctylsulfosuccinat-Natriumsalz; 50 %ig in Wasser; 4,8 g) und tert-Dodecylmercaptan (0,75 g) wurden zu einem Gemisch von Styrol (84,4 g) und n-Butylacrylat (155,7 g) gegeben. Man gab das Monomerengemisch zu der wässrigen Lösung von 4 -OH-TEMPO und emulgierte mittels Ultrabeschallung (5 Min. bei der Einstellung 25 % und weitere 20 Min. bei 100 %). Nach der Emulgierung gab man weiteren Emulgator (C₁₅-Alkylsulfonat-Natriumsalz; 40 %ig in Wasser; 12 g) in Wasser (10 g) dazu. Man füllte die Emulsion in ein druckdichtes Polymerisationsgefäß, verschloss das Gefäß und erwärmte die Emulsion 7 Stunden lang auf 130 °C. Anschließend kühlte man die Emulsion ab, bestimmte gravimetrisch den Umsatz und analysierte das isolierte Polymer mittels GPC. Umsatz 86 %; zahlenmittleres Molekulargewicht 33 000 g/mol, Polydispersität 1,9.

### Vergleichsbeispiel 3

Beispiel 2 wurde wiederholt, wobei jedoch das Monomergemisch kein tert-Dodecylmercaptan enthielt. Umsatz 44 %; zahlenmittleres Molekulargewicht 23 000 g/mol; Polydispersität 1,6.

## Patentansprüche

1. Verfahren zur Herstellung von Polymeren, wobei wenigstens ein erstes ethylenisch ungesättigtes Monomer in Gegenwart stabiler freier Radikale oder Quellen stabiler freier Radikale sowie einer Verbindung mit wenigstens einer freien Thiolgruppe einer radikalisch initiierten Polymerisation unter Erhalt eines Polymeren unterzogen wird, wobei das molare Verhältnis von Verbindung mit freier Thiolgruppe zu stabilen freien Radikalen im Bereich von 0,05 bis 1,1 liegt und wobei es sich bei der Verbindung mit freier Thiolgruppe nicht um tert-Dodecylmercaptan handelt, wenn das Monomer Styrol oder ein Gemisch von Styrol und Butadien ist.

2. Verfahren nach Anspruch 1, wobei wenigstens ein zweites ethylenisch ungesättigtes Monomer in Gegenwart des Polymers des ersten ethylenisch ungesättigten Monomers einer radikalischen Polymerisation unter Erhalt eines Blockcopolymeren unterzogen wird.

3. Verfahren nach Anspruch 1 oder 2, wobei das molare Verhältnis von Verbindung mit freier Thiolgruppe zu stabilen freien Radikalen im Bereich von 0,05 bis 0,8 liegt.

4. Verfahren nach einem der vorhergehenden Ansprüche, wobei die Verbindung mit freier Thiolgruppe ausgewählt ist unter Verbindungen der allgemeinen Formel (I) 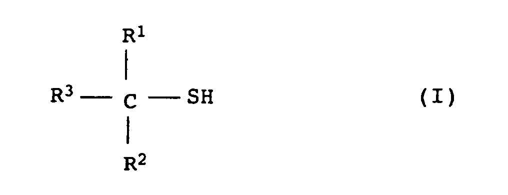 worin
R¹ , R², und R³ unabhängig voneinander für Wasserstoff, Alkyl, Aryl, Aralkyl, Cycloalkyl, Heterocyclyl oder eine Gruppe Y-Z stehen, wobei
Y ausgewählt ist unter einer Einfachbindung, linearem oder verzweigtem Alkylen, das gegebenenfalls durch ein oder mehrere, nicht benachbarte Sauerstoffatome unterbrochen sein kann, oder Arylen, das gegebenenfalls mit C₁-C₄-Alkyl, C₁-C₄-Alkoxy oder Halogen substituiert ist, und
2 ausgewählt ist unter den folgenden funktionellen Gruppen: -OR⁴, -NR⁴R⁵, -N+R⁴R⁵R⁶, -C(O)-R⁴, C(O)-NR⁴R⁵, -OC(O)-OR⁴, -OC(O)-NR⁴R⁵, -N(R⁶)-C(O)-R⁴, -N(R⁶)-C(O)-OR⁴, -N(R⁶)-C(O)-NR⁴R⁵, -SR⁴, -S(O)-R⁴, -S(O)₂-R⁴, -O-S(O)₂-OR⁴,-Si(R⁷)₃, -O-Si(R⁷)₃, -S(O)₂-NR⁴R⁵, -P(O)(OR⁴)₂, -P(O)(NR⁴R⁵)₂, -O-P(O)R⁴(OR⁵), -Si(OR⁷)₃, -OSi(OR⁷)₃,-CN, -OCN, -SCN, -NO₂ oder Halogen, sowie im Falle von sauren funktionellen Gruppen auch die Alkalimetall-, Erdalkalimetall- oder Ammoniumsalze, im Falle basischer Gruppen auch Säureadditionssalze, und worin R⁴,-R⁵, R⁶, und R⁷, unabhängig voneinander für Wasserstoff, Alkyl, Aryl, Aralkyl, Alkylcarbonyl oder Arylcarbonyl stehen; oder
R¹ oder R² gemeinsam mit dem Kohlenstoffatom, an das sie gebunden sind, für einen Cycloalkylrest stehen, der gegebenenfalls wenigstens eine der vorgenannten funktionellen Gruppen Y-Z, einen doppelt gebundenen Sauerstoff oder gegebenenfalls Sauerstoff, Stickstoff oder Schwefel als Heteroatom aufweist; oder
R¹ und R² gemeinsam mit dem Kohlenstoffatom, an das sie gebunden sind, eine Carbonylfunktion, eine Iminofunktion, die gegebenenfalls mit Alkyl, Aryl oder Aralkyl substituiert ist, bedeuten; oder
R¹, R² und R³ gemeinsam mit dem Kohlenstoffatom, an das sie gebunden sind, für einen Arylrest, der gegebenenfalls wenigstens eine der vorgenannten Gruppen Y-Z aufweist stehen; oder
R¹, R² und R³ gemeinsam für einen heterocyclischen Rest stehen.

5. Verfahren nach einem der vorhergehenden Ansprüche, wobei die Verbindung mit mindestens einer freien Thiolgruppe ausgewählt ist unter Alkylmercaptanen, Aminoalkanthiolen, deren Mono-und Di-N-C₁-C₄-alkylderivaten; aromatischen Aminothiolen sowie deren Mono- und Di-N-C₁-C₄-alkylderivaten; aliphatischen und aromatischen Mercaptocarbonsäuren, Mercaptodicarbonsäuren und Aminomercaptocarbonsäuren, deren N-Alkyl-, N-Aryl-, N-Aralkyl-Derivaten bzw. deren N,N-Dialkyl-, N,N-Diaryl-, N,N-Bis(aralkyl)derivaten, den Estern der genannten Carbonsäuren mit aliphatischen, aromatischen oder araliphatischen Alkoholen; aromatischen und aliphatischen Mercaptoalkoholen sowie Estern der Mercaptoalkohole mit C₁-C₁₀-Alkancarbonsäuren, C₆-C₂₀-Arylcarbonsäuren oder C₇-C₂₀-Aralkylcarbonsäuren; Mercaptodialkylketonen; Mercaptoalkylarylketonen; Mercaptoalkyl-und Mercaptoarylsulfonsäuren sowie deren Alkali-, Erdalkaliund Ammoniumsalzen; Thioharnstoff, der gegebenenfalls an einem oder beiden Stickstoffatomen mit Alkyl, Aryl, Aralkyl, Alkylcarbonyl oder Arylcarbonyl substituiert ist; Thiosemicarbazid, das gegebenenfalls am Amin-Stickstoff mit Alkyl, Aryl, Aralkyl, Alkylcarbonyl oder Arylcarbonyl substituiert ist; Mercapto-substituierten Stickstoffheterocyclen, umfassend mercaptosubstituiertes Imidazol, Imidazolin, Thiazol, Thiazolin, Triazol, Thiadiazol und Oxazol, die gegebenenfalls mit Amino, Halogen, Alkyl oder Aryl substituiert sind und/oder einen ankondensierten, gegebenenfalls substituierten Benzolring aufweisen; aliphatische und aromatische Thiocarbonsäuren sowie deren Amide, N-Alkyl- und N-Arylamide; Mercaptoalkyltrialkoxysilanen.

6. Verfahren nach Anspruch 5, wobei die Verbindung mit mindestens einer freien Thiolgruppe ausgewählt ist unter C₁-C₂₀-kylmercaptanen, 2-Aminoethanthiol, N-Methyl-, N,N-Dimethyl-, N-Ethyl-, N,N-Diethyl-2-aminoethanthiol, 2-, 3- und 4-Aminothiophenol, 2-Mercaptoessigsäure, 2-Mercaptopropionsäure, 2-Mercaptoisobuttersäure, 2-Mercaptobernsteinsäure, 2-, 3-und 4-Mercaptobenzoesäure, 2-Amino-3-mercapto-3-methyl-butansäure, den Ethyl-, Ethyl- und Phenylestern der genannten Carbonsäuren, 2-Hydroxyethanthiol, 2- und 3-Hydroxypropanthiol, 2- und 4-Hydroxybutanthiol, 2-Mercaptobutan-1,4-diol, α-Thioglycerin, 2-Hydroxycyclopentanthiol, 2-und 4-Mercaptophenol, 2-Mercaptoethansulfonsäure, 2- und 3-Mercaptopropansulfonsäure, 2- und 4-Mercaptobutansulfonsäure sowie den Alkali-, Erdalkali- oder Ammoniumsalzen der genannten Sulfonsäuren, 1-Mercaptoaceton, Phenacylthiol, 4-Mercaptoacetophenon, 4-Mercaptobenzophenon, Thioharnstoff, N-Methyl-, N-Ethyl-, N-Alkyl-, N-Acetyl-, N-Phenylthioharnstoff, N,N'-Dimethyl-, N,N'-Diethyl-, N,N'-Diisopropyl-, N,N'-Di-n-butyl-, N,N'-Diphenylthioharnstoff, Thiosemicarbazid, 4-Methyl-, 4-Ethyl-, 4-Phenylthiosemicarbazid, Mercaptothiadiazol, 2-Amino-5-mercaptothiadiazol, Thiazolin-2-thiol, Imidazolin-2-thiol, 3-Amino-5-mercaptotriazol, 2-Mercaptobenzimidazol, 2-Mercaptobenzoxazol, 2-Mercaptobenzothiazol, Thioessigsäure, Thiopropionsäure, Thiobenzoesäure, Thioacetamid, Thiobenzamid, 3-Mercaptopropyltrimethoxysilan und -triethoxysilan.

7. Verfahren nach einem der vorhergehenden Ansprüche, wobei das stabile freie Radikal oder die Quelle stabiler freier Radikale, bezogen auf die molare Menge an ethylenisch ungesättigtem Monomeren, in einer Menge von 10⁻⁶ bis 10 Mol-% verwendet wird.

8. Verfahren nach einem der vorhergehenden Ansprüche, wobei zur Initiierung der Polymerisation wenigstens ein Radikalstarter verwendet wird und das molare Verhältnis zwischen stabilem freien Radikal oder Quelle stabiler freier Radikale und Radikalstarter zwischen 0,1 und 10 gewählt ist.

9. Verfahren nach einem der vorhergehenden Ansprüche, wobei die Polymerisationstemperatur im Bereich von 40 bis 200 °C liegt.

10. Verfahren nach einem der vorhergehenden Anspruch, wobei das stabile freie Radikal ein N-Oxyl-Radikal und/oder die stabile freie Radikal-Quelle die Quelle eines N-Oxyl-Radikals ist.

## Claims

1. A process for the preparation of polymers, wherein at least one first ethylenically unsaturated monomer is subjected to a free radical polymerization in the presence of stable free radicals or sources of stable free radicals and of a compound having at least one free thiol group to give a polymer, wherein the molar ratio of compound having a free thiol group to stable free radicals is from 0.05 to 1.1 and wherein the compound having a free thiol group is not tert-dodecyl mercaptan when the monomer is styrene or a mixture of styrene and butadiene.

2. The process according to claim 1, wherein at least one second ethylenically unsaturated monomer is subjected to a free radical polymerization in the presence of the polymer of the first ethylenically unsaturated monomer to give a block copolymer.

3. The process according to claim 1 or 2, wherein the molar ratio of compound having a free thiol group to stable free radicals is from 0.05 to 0.8.

4. The process according to any of the preceding claims, wherein the compound having a free thiol group is selected from compounds of the formula (I) 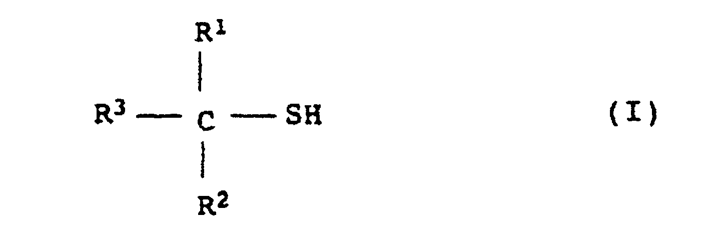 where
R¹, R², and R³, independently of one another, are each hydrogen, alkyl, aryl, aralkyl, cycloalkyl, heterocyclyl or a group Y-Z, where
Y is selected from a single bond, linear or branched alkylene, which may be interrupted by one or more non-neighboring oxygen atoms, or arylene, which is unsubstituted or substituted by C₁-C₄-alkyl, C₁-C₄-alkoxy or halogen, and
Z is selected from the following functional groups: -OR⁴, -NR⁴R⁵, -N+R⁴R⁵R⁶, -C(O)-R⁴, C (O) -NR⁴R⁵, -OC (O) -OR⁴, -OC (O) -NR⁴R⁵, -N (R⁶)-C (O) -R⁴, -N (R⁶) -C (O) -OR⁴, -N (R⁶) -C (O) -NR⁴R⁵, -SR⁴, -S(O)-R⁴, -S(O)₂-R⁴, -O-S (O) ₂-OR⁴, -Si-(R⁷) 3, -O-Si(R⁷)₃, -S(O)₂-NR⁴R⁵, -P(O)(OR⁴)₂, -P (O) (NR⁴R⁵) ₂, -O-P (O) R⁴ (OR⁵) , -Si (OR⁷) ₃, -O-Si (OR⁷) ₃, -CN, -OCN, -SCN, -NO₂ or halogen, and, in the case of acidic functional groups, also the alkali metal, alkaline earth metal or ammonium salts and, in the case of basic groups, also the acid addition salts, and where R⁴, R⁵, R⁶ and R⁷, independently of one another, are each hydrogen, alkyl, aryl, aralkyl, alkylcarbonyl or arylcarbonyl; or
R¹ or R², together with the carbon atom to which they are bonded, are a cycloalkyl radical which may have at least one of the abovementioned functional groups Y-Z, a double bonded oxygen or, if appropriate, oxygen, nitrogen or sulfur as a heteroatom; or
R¹ and R², together with the carbon atom to which they are bonded, are a carbonyl function or an imino function which is unsubstituted or substituted by alkyl, aryl or aralkyl; or
R¹, R² and R³, together with the carbon atom to which they are bonded, are an aryl radical which may have at least one of the abovementioned groups Y-Z; or
R¹, R² and R³ together are a heterocyclic radical.

5. The process according to any of the preceding claims, wherein the compound having at least one free thiol group is selected from alkyl mercaptans, aminoalkanethiols and their mono- and di-N-C₁-C₄-alkyl derivatives; aromatic aminothiols and their mono- and di-N-C₁-C₄-alkyl derivatives; aliphatic and aromatic mercaptocarboxylic acids, mercaptodicarboxylic acids and aminomercaptocarboxylic acids, their N-alkyl, N-aryl and N-aralkyl derivatives or their N,N-dialkyl, N,N-diaryl or N,N-bis(aralkyl) derivatives, the esters of said carboxylic acids with aliphatic, aromatic or araliphatic alcohols; aromatic and aliphatic mercaptoalcohols and esters of the mercaptoalcohols with C₁-C₁₀-alkanecarboxylic acids, C₆-C₂₀-aralkylcarboxylic acids or C₇-C₂₀-aralkylcarboxylic acids; mercaptodialkyl ketones; mercaptoalkyl aryl ketones; mercaptoalkyl- and mercaptoarylsulfonic acids and their alkali metal, alkaline earth metal and ammonium salts; thiourea which is unsubstituted or substituted on one or both nitrogen atoms by alkyl, aryl, aralkyl, alkylcarbonyl or arylcarbonyl; thiosemicarbazide which is unsubstituted or substituted on the amine nitrogen by alkyl, aryl, aralkyl, alkylcarbonyl or arylcarbonyl; mercapto-substituted nitrogen heterocycles, including mercapto-substituted imidazole, imidazoline, thiazole, thiazoline, triazole, thiadiazole and oxazole, which are unsubstituted or substituted by amino, halogen, alkyl or aryl and/or have a fused, unsubstituted or substituted benzene ring; aliphatic and aromatic thiocarboxylic acids and their amides, N-alkylamides and N-arylamides; mercaptoalkyl-trialkoxysilanes.

6. The process according to claim 5, wherein the compound having at least one free thiol group is selected from C₁-C₂₀-alkylmercaptans, 2-aminoethanethiol, N-methyl-, N,N-dimethyl-, N-ethyl- and N,N-diethyl-2-aminoethanethiol, 2-, 3-and 4-aminothiophenol, 2-mercaptoacetic acid, 2-mercaptopropionic acid, 2-mercaptoisobutyric acid, 2-mercaptosuccinic acid, 2-, 3- and 4-mercaptobenzoic acid, 2-amino-3-mercapto-3-methylbutanoic acid, the methyl, ethyl and phenyl esters of said carboxylic acids, 2-hydroxyethanethiol, 2- and 3-hydroxypropanethiol, 2- and 4-hydroxybutanethiol, 2-mercaptobutane-1,4-diol, α-thioglycerol, 2-hydroxycyclopentanethiol, 2- and 4-mercaptophenol, 2-mercaptoethanesulfonic acid, 2- and 3-mercaptopropanesulfonic acid, 2-and 4-mercaptobutanesulfonic acid and the alkali metal, alkaline earth metal or ammonium salts of said sulfonic acids, 1-mercaptoacetone, phenacylthiol, 4-mercaptoacetophenone, 4-mercaptobenzophenone, thiourea, N-methyl-, N-ethyl-, N-alkyl-, N-acetyl- and N-phenylthiourea, N,N'-dimethyl-, N,N'-diethyl-, N,N'-diisopropyl-, N,N'-di-n-butyl- and N,N'-diphenylthiourea, thiosemicarbazide, 4-methyl-, 4-ethyl- and 4-phenylthiosemicarbazide, mercaptothiadiazole, 2-amino-5-mercaptothiadiazole, thiazoline-2-thiol, imidazoline-2-thiol, 3-amino-5-mercaptotriazole, 2-mercaptobenzimidazole, 2-mercaptobenzoxazole, 2-mercaptobenzothiazole, thioacetic acid, thiopropionic acid, thiobenzoic acid, thioacetamide, thiobenzamide, 3-mercaptopropyltrimethoxysilane and 3-mercaptopropyltriethoxysilane.

7. The process according to any of the preceding claims, wherein the stable free radical or the source of stable free radicals is used in an amount of from 10⁻⁶ to 10 mol%, based on the molar amount of ethylenically unsaturated monomers.

8. The process according to any of the preceding claims, wherein at least one free radical initiator is used for initiating the polymerization and the molar ratio of stable free radicals or source of stable free radicals to free radical initiators is chosen to be from 0.1 to 10.

9. The process according to any of the preceding claims, wherein the polymerization temperature is from 40 to 200°C.

10. The process according to any of the preceding claims, wherein the stable free radical is an N-oxyl radical and/or the stable free radical source is the source of an N-oxyl radical.

## Revendications

1. Procédé de fabrication de polymères, dans lequel au moins un premier monomère éthyléniquement insaturé est soumis à une polymérisation initiée radicalairement en présence de radicaux libres stables ou de sources de radicaux libres stables et d'un composé comportant au moins un groupement thiol libre avec obtention d'un polymère, dans lequel le rapport molaire entre le composé comportant un groupement thiol libre et les radicaux libres stables est de 0,05 à 1,1 et dans lequel le composé comportant un groupement thiol libre n'est pas le tert-dodécylmercaptan lorsque le monomère est le styrène ou un mélange de styrène et de butadiène.

2. Procédé selon la revendication 1, dans lequel au moins un second monomère éthyléniquement insaturé est soumis à une polymérisation radicalaire en présence du polymère du premier monomère éthyléniquement insaturé avec obtention d'un copolymère séquencé.

3. Procédé selon la revendication 1 ou 2, dans lequel le rapport molaire entre le composé comportant un groupement thiol libre et les radicaux libres stables est de 0,05 à 0,8.

4. Procédé selon l'une quelconque des revendications précédentes, dans lequel le composé comportant un groupement thiol libre est choisi parmi les composés de formule générale (I) 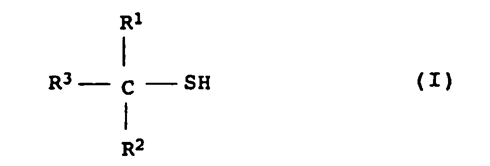 dans laquelle
R¹, R² et R³ représentent indépendamment les uns des autres l'hydrogène, un alkyle, un aryle, un aralkyle, un cycloalkyle, un hétérocyclyle ou un groupement Y-Z, dans lequel
Y est choisi parmi une simple liaison, un alkylène linéaire ou ramifié, qui peut éventuellement être interrompu par un ou plusieurs atomes d'oxygène non adjacents, ou un arylène, qui est éventuellement substitué par un alkyle en C₁-C₄, un alcoxy en C₁-C₄ ou un halogène, et
Z est choisi parmi les groupements fonctionnels suivants : -OR⁴, -NR⁴R⁵, -N+R⁴R⁵R⁶, -C (O) -R⁴, C (O) -NR⁴R⁵, -OC (O) -OR⁴, -OC (O) -NR⁴R⁵, -N (R⁶) -C (O) -R⁴, -N (R⁶) -C (O) -OR⁴, -N(R⁶)-C(O)-NR⁴R⁵, -SR⁴, -S(O)-R⁴ -S (O) ₂-R⁴, -O-S (O) ₂-OR⁴, -Si (R⁷)_{3,} -O-Si(R⁷)₃, -S(O)₂-NR⁴R⁵, -P(O)(OR⁴)_{2,} - P (O) (NR⁴R⁵) ₂, -O-P (O) R⁴ (OR⁵) , -Si(OR⁷)₃, -OSi (OR⁷) ₃, -CN, -OCN, -SCN, -NO₂ ou halogène, et dans le cas de groupements fonctionnels acides également les sels de métaux alcalin, de métaux alcalino-terreux ou d'ammonium, dans le cas de groupements basiques également les sels d'addition acide, R⁴, R⁵, R⁶ et R⁷ représentant indépendamment les uns des autres l'hydrogène, un alkyle, un aryle, un aralkyle, un alkylcarbonyle ou un arylcarbonyle ; ou
R¹ ou R² représente ensemble avec l'atome de carbone auquel il est relié un radical cycloalkyle, qui comporte éventuellement au moins un des groupements fonctionnels Y-Z susmentionnés, un oxygène relié par une double liaison ou éventuellement un oxygène, azote ou soufre en tant qu'hétéroatome ; ou
R¹ et R² représentent ensemble avec l'atome de carbone auquel ils sont reliés une fonction carbonyle, une fonction imino, qui est éventuellement substituée avec alkyle, aryle ou aralkyle ; ou
R¹, R² et R³ représentent ensemble avec l'atome de carbone auquel ils sont reliés un radical aryle qui comporte éventuellement au moins un des groupements Y-Z susmentionnés ; ou
R¹, R² et R³ représentent ensemble un radical hétérocyclique.

5. Procédé selon l'une quelconque des revendications précédentes, dans lequel le composé comportant au moins un groupement thiol libre est choisi parmi les alkylmercaptans, les aminoalcanethiols, leurs dérivés mono- et di-N-C₁-C₄-alkyle ; les aminothiols aromatiques et leurs dérivés mono- et di-N-C₁-C₄-alkyle ; les acides mercaptocarboxyliques, mercaptodicarboxyliques et aminomercaptocarboxyliques aliphatiques et aromatiques, leurs dérivés N-alkyle, N-aryle, N-aralkyle ou leurs dérivés N,N-dialkyle, N,N-diaryle, N,N-bis(aralkyle), les esters des acides carboxyliques susmentionnés avec des alcools aliphatiques, aromatiques ou araliphatiques ; les mercaptoalcools aromatiques et aliphatiques et les esters des mercaptoalcools avec des acides alcanecarboxyliques en C₁-C₁₀, des acides arylcarboxyliques en C₆-C₂₀ ou des acides aralkylcarboxyliques en C₇-C₂₀ ; les mercaptodialkylcétones ; les mercaptoalkylarylcétones ; les acides mercaptoalkyl- et mercaptoarylsulfoniques et leurs sels alcalins, alcalino-terreux et ammonium ; la thiourée, éventuellement substituée au niveau d'un ou des deux atomes d'azote avec alkyle, aryle, aralkyle, alkylcarbonyle ou arylcarbonyle ; le thiosemicarbazide, éventuellement substitué sur l'azote de l'amine avec alkyle, aryle, aralkyle, alkylcarbonyle ou arylcarbonyle ; les hétérocycles d'azote à substitution mercapto, qui comprennent l'imidazole, l'imidazoline, le thiazole, la thiazoline, le triazole, le thiadiazole et l'oxazole à substitution mercapto, éventuellement substitués avec amino, halogène, alkyle ou aryle et/ou un cycle benzène condensé éventuellement substitué ; les acides thiocarboxyliques aliphatiques et aromatiques et leurs amides, N-alkyl- et N-arylamides ; les mercaptoalkyltrialcoxysilanes.

6. Procédé selon la revendication 5, dans lequel le composé comportant au moins un groupement thiol libre est choisi parmi les alkylmercaptans en C₁-C₂₀, le 2-aminoéthanethiol, le N-méthyl-, N,N-diméthyl-, N-éthyl-, N,N-diéthyl-2-aminoéthanethiol, le 2-, 3- et 4-amino-thiophénol, l'acide 2-mercaptoacétique, l'acide 2-mercaptopropionique, l'acide 2-mercaptoisobutyrique, l'acide 2-mercaptosuccinique, l'acide 2-, 3- et 4-mercaptobenzoïque, l'acide 2-amino-3-mercapto-3-méthylbutanoïque, les esters méthyliques, éthyliques et phényliques des acides carboxyliques susmentionnés, le 2-hydroxyéthanethiol, le 2- et 3-hydroxypropanethiol, le 2- et 4-hydroxybutanethiol, le 2-mercaptobutan-1,4-diol, l'α-thioglycérine, le 2-hydroxycyclopentanethiol, le 2- et 4-mercaptophénol, l'acide 2-mercaptoéthanesulfonique, l'acide 2- et 3-mercaptopropanesulfonique, l'acide 2- et 4-mercaptobutanesulfonique et les sels alcalins, alcalino-terreux ou ammonium des acides sulfoniques susmentionnés, la 1-mercaptoacétone, le phénacylthiol, la 4-mercaptoacétophénone, la 4-mercaptobenzophénone, la thiourée, la N-méthyl-, N-éthyl-, N-alkyl-, N-acétyl-, N-phénylthiourée, la N,N'-diméthyl-, N,N'-diéthyl-, N,N'-diisopropyl-, N,N'-di-n-butyl-, N,N'-diphénylthiourée, le thiosemicarbazide, le 4-méthyl-, 4-éthyl-, 4-phénylthiosemicarbazide, le mercaptothiadiazole, le 2-amino-5-mercaptothiadiazole, le thiazolin-2-thiol, l'imidazolin-2-thiol, le 3-amino-5-mercaptotriazole, le 2-mercaptobenzimidazole, le 2-mercaptobenzoxazole, le 2-mercaptobenzothiazole, l'acide thioacétique, l'acide thiopropionique, l'acide thiobenzoïque, le thioacétamide, le thiobenzamide, le 3-mercaptopropyltriméthoxysilane et -triéthoxysilane.

7. Procédé selon l'une quelconque des revendications précédentes, dans lequel le radical libre stable ou la source de radicaux libres stables est utilisé en une quantité de 10⁻⁶ à 10 % en moles par rapport à la quantité molaire de monomères éthyléniquement insaturés.

8. Procédé selon l'une quelconque des revendications précédentes, dans lequel au moins un initiateur radicalaire est utilisé pour initier la polymérisation et le rapport molaire entre le radical libre stable ou la source de radicaux libres stables et l'initiateur radicalaire est choisi entre 0,1 et 10.

9. Procédé selon l'une quelconque des revendications précédentes, dans lequel la température de polymérisation est de 40 à 200 °C.

10. Procédé selon l'une quelconque des revendications précédentes, dans lequel le radical libre stable est un radical N-oxyle et/ou la source de radicaux libres stables est la source d'un radical N-oxyle.
